# EUROPEAN PATENT APPLICATION

(11) **EP 2 081 120 A1**
(43) Date of publication of application: **22.07.2009**
(21) Application number: 08150108.2
(22) Date of filing: 08.01.2008
(51) Int. Cl.: G06F 17/30

(54) **Method and system for configurable rule-based cache refreshes**

(71) Applicant: Research In Motion Limited, Waterloo, Ontario N2L 3W8 (CA)
(72) Inventor: Martin, Daryl Joseph, Paradise Newfoundland & Labrador A1L 2Y6 (CA); O'Keefe, Christopher David, St John's Newfoundland & Labrador A1B 4H (CA)
(74) Representative: Rickard, David John

(57) **Abstract**

A method and system for enhancing the download of a webpage to a mobile communication device or other type of networked device. The system comprises a module for retrieving a designated webpage from a web server. The system includes a cache for storing a copy of the retrieved webpage and a component for refreshing the cache. The system further includes a module for transmitting the webpage from the cache to the device. The refresh or update frequency for the cache may be defined by a user of the device. The designated webpage may be defined by a user according to a rule or other input parameter.

## Description

The present application relates generally to wireless packet data service networks, and more particularly, to a method and system for automated or configurable remote cache refreshes for a mobile communication device in a wireless packet data service network.

In the wireless marketplace, the speed at which data is delivered to a wireless device can distance a company or a product from its competitors. Another trend in the wireless market is the constantly increasing bandwidth being offered by the data networks. With the increasing bandwidth, users are using their devices more and more for higher bandwidth activities, such as browsing the Internet. This in turn is leading to usability problems in end-to-end latency.

Accordingly, there remains a need for improvements in the art.

### GENERAL

The present application is directed generally to a method and system for automated and configurable remote cache refreshes for a mobile communication device in a wireless packet data service network.

According to one broad aspect, there may be provided a method for enhancing downloading of a webpage to a mobile communication device, the method may comprise the steps of: designating a webpage for the mobile communication device; retrieving the requested webpage from a web server; storing the requested webpage in a cache; refreshing said cache; transmitting a copy of the webpage from the cache to the mobile communication device.

According to another broad aspect, there may be provided a server for providing webpage downloads to one or more devices in a communication network, the system may comprise: means for designating a webpage for the one or more devices; means for retrieving the designated webpage from a web server; means for storing the retrieved webpage in a cache; means for refreshing the cache; means for transmitting a copy of the webpage from the cache to the one or more devices.

According to a yet another broad aspect, there may be provided a system for enhancing the downloading of a webpage to a handheld device coupled to a wireless communication network, the system may comprise: a browser running on the handheld device and having a component for designating a webpage; an intermediary server coupled to the wireless communication network and having a component for retrieving the designated webpage from a web server; the intermediary server including a cache for storing a copy of the webpage, and the intermediary server having a component for refreshing the cache.

Other aspects and features will become apparent to those ordinarily skilled in the art upon review of the following description of embodiments in conjunction with the accompanying figures.

### BRIEF DESCRIPTION OF THE DRAWINGS

Reference will now be made to the accompanying drawings which show, by way of example, embodiments of the methods and systems described herein, and how they may be carried into effect, and in which:

Fig. 1 shows in diagrammatic form an exemplary network environment suitable for operating an embodiment according to the present application;

Fig. 2 shows in schematic form an exemplary mobile wireless communication device which is capable of communicating within the network environment of Fig. 1;

Fig. 3 shows in diagrammatic form a screen shot for operating a mobile communications device in accordance with an embodiment; and

Fig. 4 shows in flowchart form a process for providing cache refreshes for use by a mobile communications device according to an embodiment.

Like reference numerals indicate like or corresponding elements in the drawings.

### DESCRIPTION OF PREFERRED EMBODIMENTS

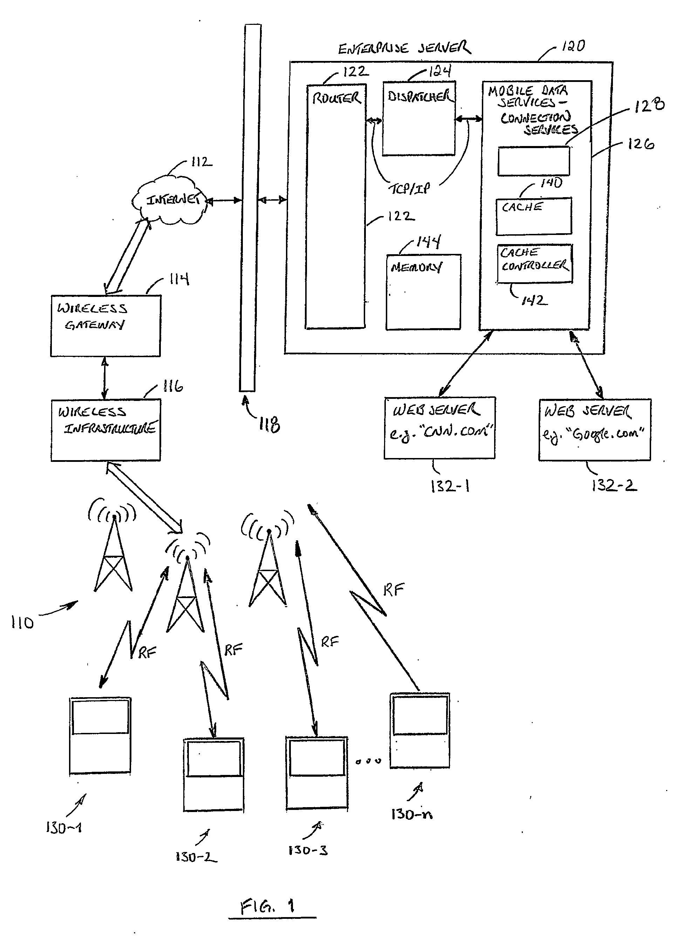

Reference is first made to Fig. 1, which shows in diagrammatic form an exemplary network environment 100 wherein an embodiment as described herein may be practiced. The network environment 100 comprises a wireless network 110, the Internet 112, a wireless gateway 114, a wireless infrastructure 116, and an enterprise server 120. The wireless network 110 serves a plurality of users, each having a mobile communication device (MCD) 130, indicated individually as 130-1, 130-2, ....130-n.

The wireless gateway 114 and the wireless infrastructure 116 provide a link between the Internet 112 and the wireless network 110. The wireless infrastructure 116 determines the most likely network for locating a given user and tracks the users as they roam between countries or networks. A message is then delivered to the mobile communication device 130 via wireless transmission, typically at a radio frequency (RF), from a base station in the wireless network 110 to the mobile device 130. The wireless network 110 may comprise any wireless network over which messages may be exchanged with a mobile communication device.

The wireless infrastructure 116 includes a series of connections to the wireless network 110. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Divisional Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric networks include the Mobitex.TM. Radio Network and the DataTAC.TM. Radio Network. Examples of older voice-centric data networks include Personal Communication Systems (PCS) networks like GSM, and TDMA systems.

The enterprise server 120 may be implemented, for example, on a network computer within a firewall 118 for a corporation, a computer within an ISP system or the like. The enterprise server 120 provides an interface for email exchange over the Internet 112 and web access on the Internet 112 for mobile communication devices 130 equipped with a browser or having browser capability as will be described in more detail below.

The enterprise server 120, for example, implemented as a BlackBerry® Enterprise Server or BES, comprises a software module running on a server that acts as the centralized link between the mobile wireless communication devices 130, the wireless networks 110 and the enterprise applications. The server 120 integrates with enterprise messaging (e.g. Microsoft Exchange email system) and collaboration systems to provide the users of the mobile communication devices 130 with access to email, enterprise instant messaging and personal information management tools. All data between applications and the mobile communication devices 130 flows centrally through the enterprise server 120. As shown in Fig. 1, the enterprise server 120 comprises a router 122, a dispatcher 124 and a Mobile Data Services-Connection Services (MDS-CS) module or system 126.

The router 122 is designed to connect to the wireless network 110 to route data to and from the mobile wireless communication devices 130. The dispatcher 124 is designed to compress and encrypt the data communications for the mobile communication devices 130. The dispatcher 124 routes the data through the router 122 to and from the wireless network 110. The Mobile Data Services module 126, for example, the BlackBerry^{®} MDS™ Connection Service, functions as a gateway and is designed to manage interactions and requests between mobile wireless communication devices 130 (for example, BlackBerry® handheld devices) and enterprise applications" The Mobile Data Services system 126 enables always-on/push-based access to enterprise applications and information using the mobile communication device 130, browser and software development tools. The MDS 126 provides connectivity (i.e. HTTP/HTTPS) to the Internet 112. In addition, the MDS 126 provides an extensible and secure interface for extending corporate applications and the corporate Intranet based on existing web standards.

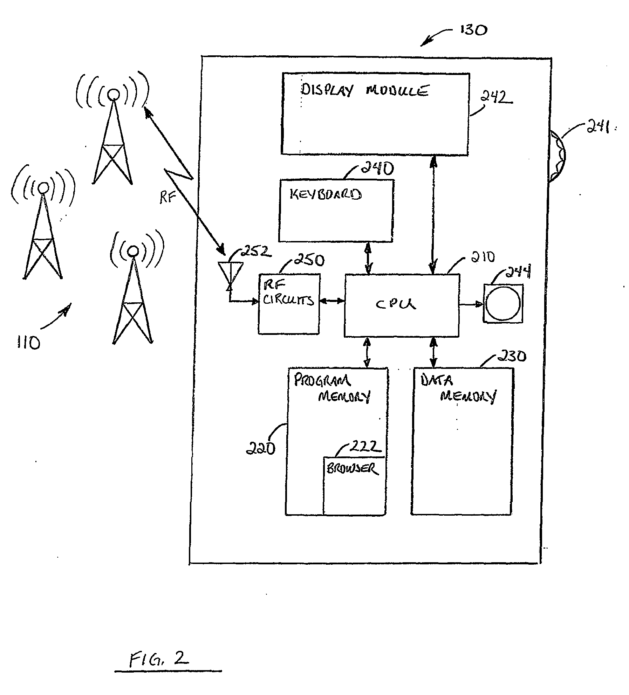

Reference is next made to Fig. 2, which shows in more detail an exemplary implementation of the mobile communication device 130. The mobile communication device 130 comprises a central processing unit or CPU 210. The CPU 210 operates under the control of a program (i.e. firmware or software) stored in program memory 220. The CPU 210 is also provided with data memory 230. The CPU 210 is also operatively coupled to a keyboard 240 and a track wheel 241 or a trackball (not shown), a display module 242 and an audio transducer or speaker 244. In addition to the program executable code providing for performing the functions associated with the operation of the mobile communication device 130, the program memory 220 includes a browser program 222. The browser program 222 allows a user to access web pages on the Internet 112 using the mobile communication device 130, i.e. utilizing a graphical user interface comprising, for example, the keyboard 240 and the display module 242 and/or the track wheel 241.

As shown, the mobile communication device 130 includes a RF, demodulation/modulation and decoding/coding circuits 250, and a suitable RF antenna 252. The RF demodulator/modulator and decoder/coder circuits 250 and the RF antenna 252 are operatively coupled to the CPU 210 and provide an interface for wireless communication with the wireless network 110. The particular implementation details of the RF circuits will be within the understanding of those skilled in the art, and is therefore not described in further detail.

To browse the Internet, the user invokes the browser program 222 in the mobile communication device 130 and using the graphical user interface (i.e. the display 242, the keyboard 240 and/or a thumb-operated track wheel 241) enters the URL or a bookmark for a website of interest, for example, http://www.cnn.com. The browser 222 converts the user entry into a HTTP request and sends the request to the enterprise server 120. The enterprise server 120, i.e. the MDS-CS 126, relays the HTTP request to the web server, for example, web server 132-1 for "CNN.com". In response to the request, the web server 132-1 returns the requested or corresponding webpage, which is relayed by the MDS-CS 126 to the mobile communications device 130. Similarly, if the user wishes to access another website, for example, http://www.google.com, on web server 132-2, the HTTP request from the mobile communication device 130 is relayed by the MDS-CS 126 to the web server 132-2.

The originating client, for example, a web browser, is typically referred to as the "user agent". The destination server stores resources, such as, HTML files and images, and is typically referred to as the "origin server". In between the user agent and the origin server there may be several intermediaries, for example, proxies and gateways. In the context of the present application, the mobile handheld devices 130 comprise user agents, the enterprise server or module 120 comprises an intermediary server or MDS-CS module 126, and the web servers 132 comprise origin servers. According to an embodiment, the intermediary server is located or configured behind a firewall.

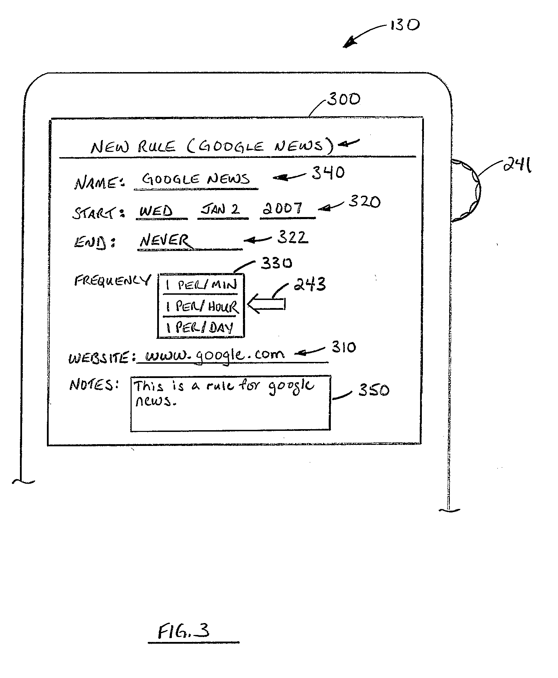

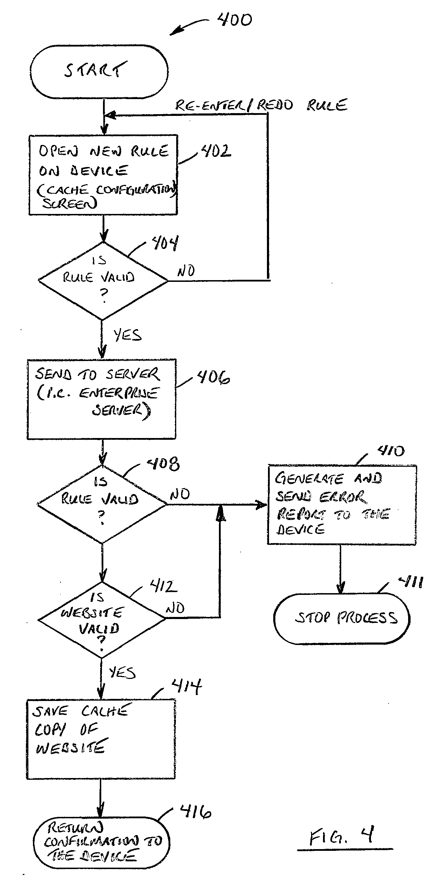

According to an embodiment, the enterprise server 120 includes a cache module indicated generally by reference 140. The cache module 140 in conjunction with a software or code object, e.g. a cache controller, 142 provides a mechanism to cache one or more web pages or web sites selected or configured by one or more of the users. According to another aspect, the web pages or web sites are refreshed and the cache 140 is updated. According to another aspect, the refresh rate may be specified or configured by the user of the mobile communication device 130, as will also be described in more detail below with reference to Fig. 3 and Fig. 4.

Referring still to Fig. 1, the MDS 126 includes a module for processing the web pages or information received from the web servers 132. The processing module 128 includes one or more code components for altering or manipulating the webpage by compressing, optimizing and/or transcoding the webpage or information from the web server 130 before transmission to the mobile communication device 130. The compression component compresses the website data for viewing on a small screen, such as the display 242 (Fig. 2) in the mobile communication device 130. The compression component may also provide image compression for optimizing images in the webpage downloaded to the mobile communications devices 130. For example, an image for a webpage may be compressed from 256K to about 4K for downloading to the mobile device 130. It will be appreciated that compression provides better utilization of the bandwidth between the server 120 and the mobile communication devices 130. The transcoding component transcodes the data, for example, by removing garbage HTML. According to an embodiment, the webpage is processed by the processing module 128 prior to be stored or cached in the cache module 140 as described in more detail below.

Reference is made to Fig. 3, which shows a screen shot of a cache configuration screen or window 300 in the mobile communication device 130. The cache configuration screen 300 allows the user to configure the webpage cache module 140 and/or the webpage refresh rate. The cache configuration screen 300 is selected by the user, for example, as a menu item and displayed on the display module 242 (Fig. 2), and information and/or configuration parameters are entered using the keyboard 240 (Fig. 2) and/or the track wheel 241 (Fig. 2). As shown in Fig. 3, according to one exemplary embodiment, the cache configuration screen 300 comprises a website input field 310, a cache/refresh start field 320, and a cache/refresh end field 322. The cache configuration screen 300 may also include a website update frequency menu box or list 330, a name display input field 340 and a Notes input field/text box 350. In operation, the user moves between the various input fields using the track wheel 241 (Fig. 2) and/or navigation keys on the keypad 240 (Fig. 2).

The cache configuration screen 300 depicts an exemplary configuration for the website: http://www.google.com, as would be entered by a user of the mobile communication device 130. The user enters the URL for the website of interest, e.g. www.google.com in the website input field 310. The user enters the start date, e.g. "Wed, Jan 2, 2007" for caching or refreshing the webpage in the cache/refresh start field 320. The user may also enter an end date for terminating the caching or refreshing of the webpage in the cache/refresh end field 322. If the user doesn't enter an end date, the caching/refreshing of the webpage continues indefinitely. The user selects a refresh frequency or rate from the website update frequency list 330. According to an embodiment, the website update frequency list 330 comprises a 60 second update rate 332, an hourly update rate 334, and a daily update rate 336. As depicted in Fig. 3, the user has selected the hourly refresh rate 334 using the track wheel 241 to position the cursor 243. The user enters a user defined name in the name input field 340, in this example, "Google News". The user can enter a name for the rule in the Notes input field 350. The cache configuration screen 300 may include a title bar 352 for displaying the user defined name, e.g. "Google News", in addition to an indication (e.g. "New Rule") that a new rule has been entered.

In operation and according to an embodiment, the webpage is refreshed and cached by the server 120 prior to being transmitted to the mobile communication device 130, i.e. based on the website update refresh frequency. According to another aspect, the webpage is refreshed asynchronously at the server 120, i.e. the server 120 accesses the web server 132, optimizes and stores an updated copy of the webpage in the cache 140. The webpage refresh rate at the server 120 may be implemented as a function of the user specified webpage update refresh rate or a system defined parameter in the cache refresh code object or controller module 142. The copy of the webpage from the cache 140 is downloaded to the mobile communication device 130, for example, in response to a user request or input. According to the described exemplary embodiment, the maximum website update frequency rate is limited to once per minute in order to prevent overloading the server with website refreshing. According to another embodiment, a limit may be placed on the number of refreshes allowed for a selected website or for a user, for example, 1000 website refreshes. The limit on the refreshes may be administered by the server 120, for example, as a code component or object in the MDS-CS 126. The limit may also be pushed down to the mobile communication device 130 by the server 120.

Reference is made to Fig. 4, which shows in flowchart form a process for providing cache refreshes for use by a mobile communications device according to an embodiment. The process is indicated generally by reference 400 starts with a user opening or configuring a new rule on the mobile communication device 130 or the MCD-CS 126 at 402 - for example, using the cache configuration screen 300 as described above with reference to Fig. 3. A check is made at 404 to determine if the rule is valid. According to embodiment, invalid rules comprise: an invalid start time, i.e. a start time before now; a frequency above the maximum allowed frequency, e.g. more than 1000 refreshes/second; an empty input field, e.g. no entry in the website entry field 310 (Fig. 3); and any configuration that would cause the desired caching not to occur. If it is found that the rule is not valid, then control returns to 402, and the user is prompted to change the entry. If the rule is found to be valid in 404, then the rule for configuring the cache refreshes is sent to the server (i.e. the MDS-CS 126 in the enterprise server 120 in Fig. 1) at 406. As shown, another check may be made at 408 to again verify the validity of the rule. This provides a check that the correct data was sent to the server. If the rule is not valid, e.g. the data has been corrupted, then an error message is transmitted to the mobile communication device at 410 and the process is stopped at 411. If the rule is valid, then the content of the rule is tested at 412. According to one embodiment, the rule is tested for a request to a valid website. If the rule content is not valid, e.g. does not refer to a valid website, then an error is generated and the process is stopped at 410 and 411. If the content of the rule is valid, then website specified in the rule is accessed and a cache is saved in memory, e.g. the cache module 140 on the enterprise server 120 in Fig. 1, as indicated at 414. A successful cache request response is returned to the mobile communication device in 416.

As shown in Fig. 1, the cache module 140 is configured or implemented in memory in the MDS-CS 126. According to another embodiment, the cache module 140 may be configured as part of a memory block 144 in the enterprise server 120.

While the embodiments according to the present application have been described in the context of mobile communication devices, the embodiments may be extended or find application in other client-server configurations, for example, a desktop computer and a remote Internet proxy server.

The present invention may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method for enhancing downloading of a webpage to a mobile communication device, said method comprising the steps of:
designating a webpage for the mobile communication device;
retrieving the designated webpage from a web server;
storing said designated webpage in a cache;
refreshing said cache;
transmitting said webpage from said cache to the mobile communication device.

2. The method as claimed in claim 1, wherein said step of storing comprising manipulating or altering said webpage for transmission to the mobile communication device.

3. The method as claimed in claim 1 or claim 2, further comprising the step of receiving a refresh frequency from the mobile communication device, and said step of refreshing being performed based on a said refresh frequency.

4. The method as claimed in claim 3, wherein said refresh frequency is defined at the mobile communication device.

5. The method as claimed in claim 3 or claim 4, wherein said refresh frequency comprises a start time and an end time.

6. The method as claimed in any one of the preceding claims, wherein said step of designating a webpage comprises receiving a webpage input from one of the one or more mobile communication devices.

7. The method as claimed in any one of claims 1 to 5, wherein a webpage is designated according to a rule, and said rule being defined according to a user of one of said mobile communication device.

8. A server (120) for providing webpage downloads to one or more devices (130) in a communication network (110), said server (120) comprising:
means for designating (222) a webpage for the one or more devices (130);
means for retrieving (128) the designated webpage from a web server (132);
means for storing (142) said retrieved webpage in a cache (140);
means for refreshing said cache (142);
means for transmitting (128) a copy of said webpage from said cache (140) to the one or more devices (130).

9. The server (120) as claimed in claim 8, wherein said means for designating (222) a webpage comprises an input component (300) for defining a webpage according to a rule.

10. The server (120) as claimed in claim 8 or claim 9, wherein said means for refreshing (142) comprises a periodic refresh having a refresh frequency.

11. The server (120) as claimed in claim 10, wherein said device (130) is arranged to define said refresh frequency.

12. A system for enhancing the downloading of a webpage to a handheld device (130) coupled to a wireless communication network (110), said system comprising:
a browser (222) running on the handheld device (130) and having a component for designating a webpage;
an intermediary server (120) coupled to the wireless communication network (110) and having a component for retrieving (126) said designated webpage from a web server (132);
said intermediary server (120) having a cache (140) for storing a copy of said webpage, and
said intermediary server (120) having a component for refreshing (142) said cache (140).

13. The system as claimed in claim 12, wherein said intermediary server (120) has a component for processing (128) said retrieved webpage for transmission to the handheld device.

14. The system as claimed in claim 13, wherein said processing component (128) has a component for transcoding said retrieved webpage.

15. The system as claimed in any one of claims 12 to 14, wherein said component for refreshing (142) said cache (140) is arranged to be responsive to a refresh rate.

16. The system as claimed in claim 15, wherein the handheld device (130) has a configuration screen (300) for configuring said refresh rate, said configuration screen having a webpage input (340), a refresh frequency parameter (330) and a starting time (320).

17. The system as claimed in any one of claims 12 to 16, wherein said intermediary server (120) has a component for updating (142) said webpage prior to transmitting said updated webpage to the handheld device (130).

18. The system as claimed in claim 16, wherein said component for refreshing (142) said cache is arranged to operate periodically to retrieve a copy of said webpage from said web server (132) and to refresh the copy of said webpage in said cache (140).

19. The system as claimed in any one of claims 12 to 18, wherein said intermediary server (120) is associated with an enterprise server and/or is located behind a firewall (118).

20. A computer readable medium storing computer readable instructions executable by a processor of a computing device to cause said device to implement the steps of the method of one of claims 1 to 7.

## Amended claims

### Amended claims in accordance with Rule 137(2) EPC.

**1.** A method for enhancing downloading of a webpage to a mobile communication device (130) in a communication network (110), said method comprising the steps of:
designating a webpage for the mobile communication device (130);
retrieving the designated webpage from a web server (132);
storing said designated webpage in a cache (140), said cache (140) being configured at an intermediary server (120) in the communication network (110);
at said intermediary server (120), refreshing said cache (140) by retrieving a copy of said designated webpage from said web server (132) and storing said retrieved copy of the designated webpage in said cache (140);
transmitting a copy of said webpage from said cache (140) to the mobile communication device (130).

**2.** The method as claimed in claim 1, wherein said step of refreshing said cache (140) at said intermediary server (120) is performed asynchronously in relation to operation of the mobile communication device (130).

**3.** The method as claimed in claim 1 or claim 2, further comprising the step of receiving a refresh frequency from the mobile communication device (130), and said step of refreshing being performed based on a said refresh frequency.

**4.** The method as claimed in claim 3, wherein said refresh frequency is defined at the mobile communication device (130).

**5.** The method as claimed in claim 3 or claim 4, wherein said refresh frequency comprises a start time and an end time.

**6.** The method as claimed in any one of the preceding claims, wherein said step of designating a webpage comprises receiving a webpage input from one of the one or more mobile communication devices (130).

**7.** The method as claimed in any one of claims 1 to 5, wherein a webpage is designated according to a rule, and said rule being defined according to a user of one of said mobile communication devices (130).

**8.** The method as claimed in any one of the preceding claims, wherein it comprises processing the retrieved copy of the designated webpage to compress data comprising said web page for viewing on a small screen of a mobile communication device (130) prior to storing said retrieved copy of the designated webpage in the cache (140).

**9.** A server (120) for providing webpage downloads to one or more mobile communication devices (130) in a communication network (110), said server (120) comprising:
means for designating (222) a webpage for the one or more mobile communication devices (130);
means for retrieving (128) the designated webpage from a web server (132);
means for storing (142) said retrieved webpage in a cache (140);
means for refreshing (142) said cache (140), said means (142) being configured to retrieve a copy of said designated webpage from said web server (132) and to store said retrieved copy in said cache (140);
means for transmitting (128) a copy of said webpage from said cache (140) to the one or more mobile communication devices (130).

**10.** The server (120) as claimed in claim 9, wherein said means for designating (222) a webpage comprises an input component (300) for defining a webpage according to a rule.

**11.** The server (120) as claimed in claim 9 or claim 10, wherein said means for refreshing (142) comprises a periodic refresh having a refresh frequency.

**12.** The server (120) as claimed in claim 11, wherein said server (120) is arranged to receive a defined refresh frequency from one of the mobile communication devices (130).

**13.** The server (120) as claimed in any one of claims 9 to 12, wherein the server (120) is arranged to process the retrieved copy of the designated webpage to compress data comprising said web page for viewing on a small screen of a mobile communication device (130) prior to storing said retrieved copy of the designated webpage in the cache (140).

**14.** A system for enhancing the downloading of a webpage to a handheld device (130) coupled to a wireless communication network (110), said system comprising:
a browser (222) running on the handheld device (130) and having a component for designating a webpage;
an intermediary server (120) coupled to the wireless communication network (110) and having a component for retrieving (126) said designated webpage from a web server (132);
said intermediary server (120) having a cache (140) for storing a copy of said webpage, and
said intermediary server (120) having a component for refreshing (142) said cache (140) by retrieving a copy of said designated webpage from said web server (132) and storing said retrieved copy in said cache (140).

**15.** The system as claimed in claim 14, wherein said intermediary server (120) has a component for processing (128) said retrieved webpage for transmission to the handheld device (130).

**16.** The system as claimed in claim 15, wherein said processing component (128) has a component for transcoding said retrieved webpage.

**17.** The system as claimed in any one of claims 14 to 16, wherein said component for refreshing (142) said cache (140) is arranged to be responsive to a refresh rate.

**18.** The system as claimed in claim 17, wherein the handheld device (130) has a configuration screen (300) for configuring said refresh rate, said configuration screen having a webpage input (340), a refresh frequency parameter (330) and a starting time (320).

**19.** The system as claimed in any one of claims 14 to 18, wherein said intermediary server (120) has a component for updating (142) said webpage prior to transmitting said updated webpage to the handheld device (130).

**20.** The system as claimed in claim 18, wherein said component for refreshing (142) said cache (140) is arranged to operate periodically to retrieve a copy of said webpage from said web server (132) and to refresh the copy of said webpage in said cache (140).

**21.** The system as claimed in any one of claims 14 to 20, wherein said intermediary server (120) is associated with an enterprise server and/or is located behind a firewall (118).

**22.** The system as claimed in any one of claims 14 to 21, wherein said intermediary server (120) is configured to to process the retrieved copy of the designated webpage to compress data comprising said web page for viewing on a small screen of a mobile communication device (130) prior to storing said retrieved copy of the designated webpage in the cache (140).

**23.** A computer readable medium storing computer readable instructions executable by a processor of a computing device to cause said device to implement the steps of the method of one of claims 1 to 8.
